# EUROPÄISCHE PATENTSCHRIFT

(11) **EP 0 790 730 B1**
(45) Veröffentlichungstag und Bekanntmachung des Hinweises auf die Patenterteilung: **19.03.2003**
(21) Anmeldenummer: 96118509.7
(22) Anmeldetag: 19.11.1996
(51) Int. Cl.: H04M 1/02

(54) **Gerät mit einer Anzeigevorrichtung**
Apparatus with a display device
Appareil pourvu d'un dispositif d'affichage

(30) Priorität: 14.02.1996 DE 29602545 U
(43) Veröffentlichungstag der Anmeldung: 20.08.1997
(73) Patentinhaber: ROBERT BOSCH GMBH, 70442 Stuttgart (DE)
(72) Erfinder: Eckhardt, Claus-Chr., 30171 Hannover (DE)

(56) Entgegenhaltungen:
- DE-U- 9 403 890
- GB-A- 2 293 517
- US-A- 4 292 481
- US-A- 5 146 615

## Beschreibung

### Stand der Technik

Die Erfindung geht von einem Gerät mit einer Anzeigevorrichtung nach der Gattung des Hauptanspruchs aus.

Es sind schon insbesondere als schnurlose Telefone ausgebildete Geräte bekannt (DE9403890), bei denen die Geräteoberfläche einen Durchbruch zur Aufnahme einer Anzeigevorrichtung aufweist und ein den Durchbruch umgebender Randbereich des Gerätes gegenüber der Geräteoberfläche vertieft ist. Der Randbereich dient dabei als Auflagefläche für eine durchsichtige Scheibe zur Abdeckung einer beispielsweise als Display ausgebildeten Anzeigevorrichtung.

Es ist außerdem bekannt, den Randbereich zu dekorieren, indem beispielsweise Granulat oder eine Lackierung aufgebracht wird.

### Vorteile der Erfindung

Das erfindungsgemäße Gerät mit den Merkmalen des Hauptanspruchs hat demgegenüber den Vorteil, daß ein Dekorteil vorhanden ist, das auf einfache Weise, ohne das Gerätegehäuse zu beschädigen, auf den Randbereich montiert bzw. von diesem demontiert werden kann. Auf diese Weise kann der Benutzer ohne den Fachhändler aufsuchen zu müssen und ohne einen Garantieverlust zu riskieren das Dekorteil nach seinem Geschmack auswechseln und durch ein anderes ersetzen, so daß er seine Gehäuseoberfläche individuell gestalten kann. Dabei kann der Benutzer beispielsweise auf unterschiedliche vom Hersteller angebotene Dekorteile zurückgreifen.

Durch die in den Unteransprüchen aufgeführten Maßnahmen sind vorteilhafte Weiterbildungen und Verbesserungen des im Hauptanspruch angegebenen Gerätes möglich.

Vorteilhaft gemäß Anspruch 2 ist die Verwendung einer Klebeverbindung als lösbare Verbindung. Eine solche Verbindung ist besonders stabil.

Besonders vorteilhaft gemäß Anspruch 6 ist die Verwendung einer Rastverbindung als lösbare Verbindung. Auf diese Weise ist das Dekorteil stabil mit dem Randbereich verbunden, wobei eine einfache und genau definierte Montage bzw. Demontage mittels den vorhandenen Rastelementen realisierbar ist.

Besonders vorteilhaft gemäß Anspruch 9 ist der Spalt zwischen Dekorteil und Randbereich zur Aufnahme vorzugsweise eines Verdrehwerkzeuges zum Lösen der Verbindung. Auf diese Weise wird die Demontage weiter vereinfacht und erfordert keine besondere Fingerfertigkeit.

Vorteilhaft gemäß Anspruch 10 ist die Verwendung eines zweistufig gegenüber der Geräteoberfläche vertieften Randbereiches. Auf diese Weise können die Abdeckung der Anzeigevorrichtung und das Dekor unabhängig voneinander am Gehäuse angebracht werden bzw. vom Gehäuse entfernt werden.

### Zeichnung

Ein Ausführungsbeispiel der Erfindung ist in der Zeichnung dargestellt und in der nachfolgenden Beschreibung näher erläutert. Es zeigen Figur 1 eine Ansicht der Bedienoberfläche eines schnurlosen Telefons, Figur 2 eine räumliche Ansicht des Display- und Dekorbereichs des schnurlosen Telefons, Figur 3 einen Schnitt durch den Randbereich mit aufgeklebtem Dekorteil, Figur 4 einen Ausschnitt des Randbereichs mit Rastnase und Rastöffnung, Figur 5 einen Schnitt durch den Randbereich mit in den Randbereich eingerasteter Rastnase des Dekorteils und Figur 6 einen Schnitt durch den Randbereich mit in das Dekorteil eingerasteter Rastnase des Randbereichs.

### Beschreibung des Ausführungsbeispiels

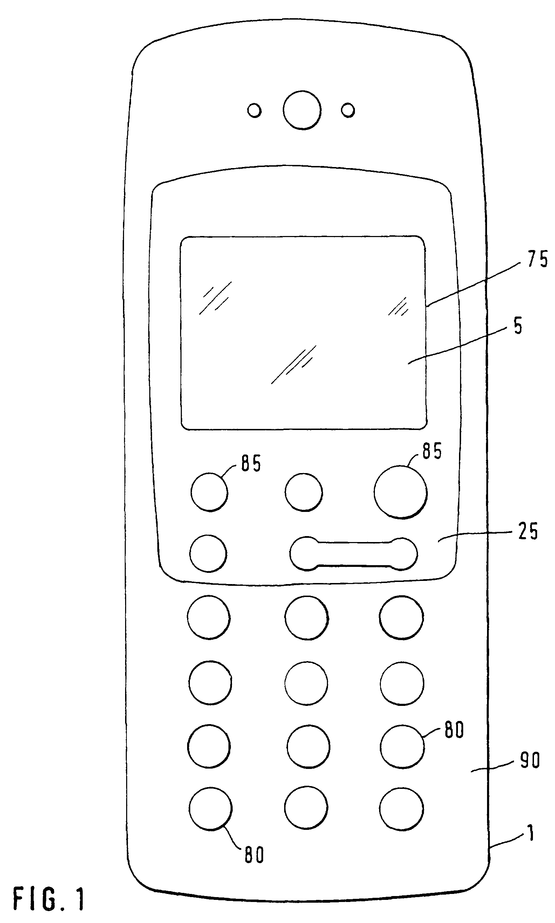

In Figur 1 kennzeichnet 1 ein als schnurloses Telefon ausgebildetes Gerät, dessen Bedienoberfläche 90 in Figur 1 dargestellt ist. In die Bedienoberfläche 90 ist eine Anzeigevorrichtung 5 eingelassen, die von einer durchsichtigen Scheibe 75 bedeckt wird. Die Anzeigevorrichtung 5 bzw. die durchsichtige Scheibe 75 ist von einem Dekorteil 25 umgeben. Das Dekorteil 25 umschließt außerdem fünf Tasten 85 des Tastenfeldes auf der Bedienoberfläche 90. Dazu weist das Dekorteil 25 Durchbrüche zur Aufnahme der Anzeigevorrichtung 5 und zur Aufnahme der Tasten 85 auf. Die Bedienoberfläche 90 des schnurlosen Telefones 1 weist außerdem zwölf Tasten 80 außerhalb des Dekorteils 25 auf.

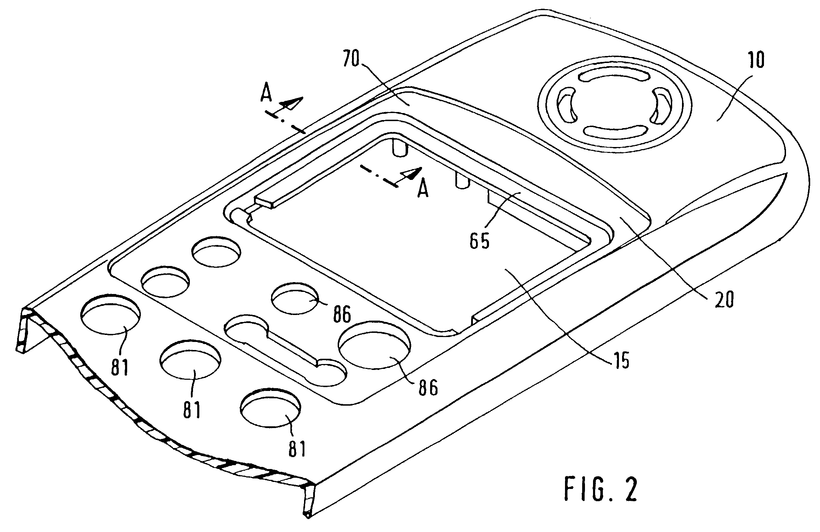

In Figur 2 ist die Geräteoberfläche 10 des schnurlosen Telefons 1 auf der Seite der Bedienoberfläche 90 dargestellt. Die Geräteoberfläche 10 weist einen Durchbruch 15 zur Aufnahme der Anzeigevorrichtung 5 auf sowie einen den Durchbruch 15 umgebenden Randbereich 20, der gegenüber der Geräteoberfläche 10 zweistufig vertieft ist. Die den Durchbruch 15 begrenzende tiefere Stufe 65 des zweistufigen Randbereichs 20 dient als Auflage für die die Anzeigevorrichtung 5 bedeckende durchsichtige Scheibe 75 und die höhere Stufe 70 des zweistufigen Randbereichs 20 dient als Auflage für das Dekorteil 25. Die höhere Stufe 70 des zweistufigen Randbereichs 20 weist außerdem fünf Durchbrüche 86 zur Aufnahme der innerhalb des Dekorteils 25 liegenden Tasten 85 auf. Für die Tasten 80 außerhalb des Dekorteils 25 sind in der Gehäuseoberfläche 10 entsprechende Durchbrüche 81 vorgesehen.

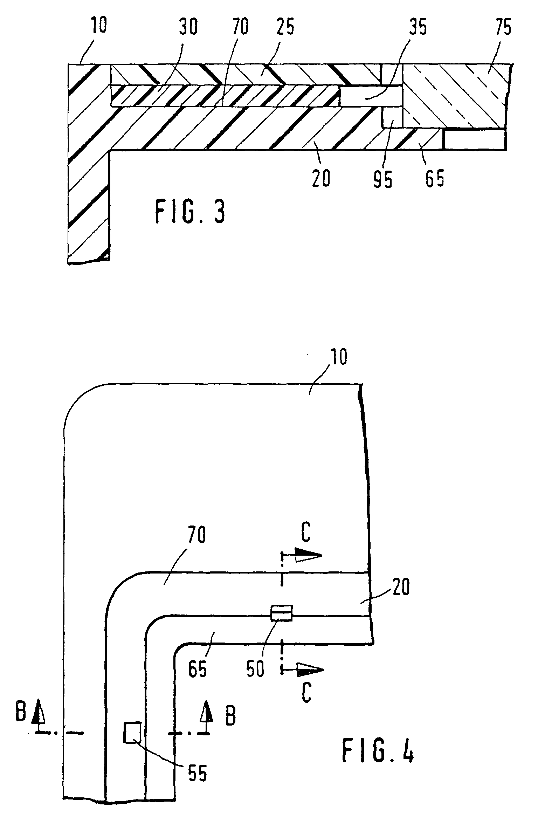

Das Dekorteil 25 ist auf den Randbereich 20 eingelegt und über eine lösbare Verbindung auf dem Randbereich 20 befestigt. Als lösbare Verbindung kann beispielsweise eine Klebeverbindung verwendet werden. Anhand eines Vertikalschnitts A-A im Randbereich 20 des Schnurlostelefons 1 ist in Figur 3 die Befestigung des Dekorteils 25 auf dem Randbereich 20 dargestellt. Dabei ist das Dekorteil 25 durch ein doppelseitiges Klebeband 30 mit der höheren Stufe 70 des zweistufigen Randbereichs 20 verbunden. Zur tieferen Stufe 65 des zweistufigen Randbereichs 20 hin wird durch das doppelseitige Klebeband 30 ein Spalt 35 zwischen dem Dekorteil 25 und der höheren Stufe 70 freigelassen. Auf der tieferen Stufe 65 liegt die durchsichtige Scheibe 75 auf, wobei die Verbindung zwischen der durchsichtigen Scheibe 75 und der tieferen Stufe 65 nicht dargestellt ist, jedoch gleichfalls durch Kleben hergestellt werden kann. Zwischen der durchsichtigen Scheibe 75 einerseits und dem Dekorteil 25 und der höheren Stufe 70 andererseits befindet sich ein zweiter Spalt 95, der zusammen mit dem ersten Spalt 35 einen äußeren Zugang zum Lösen der Verbindung ermöglicht. Das Lösen der Klebeverbindung kann dabei beispielsweise von Hand erfolgen, der erste Spalt 35 kann jedoch auch zur Aufnahme eines Verdrehwerkzeuges dienen, so daß durch die bei Auflage des Verdrehwerkzeuges auf die Kante der durchsichtigen Scheibe 75 entstehende Hebelwirkung die Klebeverbindung ohne größeren Aufwand und ohne Beschädigung des Randbereichs 20 bzw. der durchsichtigen Scheibe 75 gelöst werden kann. In Figur 3 sind die Oberflächen des Dekorteils 25 und der durchsichtigen Scheibe 75 sowie die Geräteoberfläche 10 in einer Ebene angeordnet. Das Dekorteil 25 besitzt dieselbe Breite wie die höhere Stufe 70. Aus Designgrunden sind diesbezüglich jedoch auch andere Dimensionierungen denkbar.

Durch das Bezugszeichen 30 in Figur 3 kann auch eine Klebefläche gekennzeichnet sein, die das Dekorteil 25 an seiner zum Randbereichh 20 weisenden Seite aufweist und über die es selbstklebend mit dem Randbereich 20 verbunden ist.

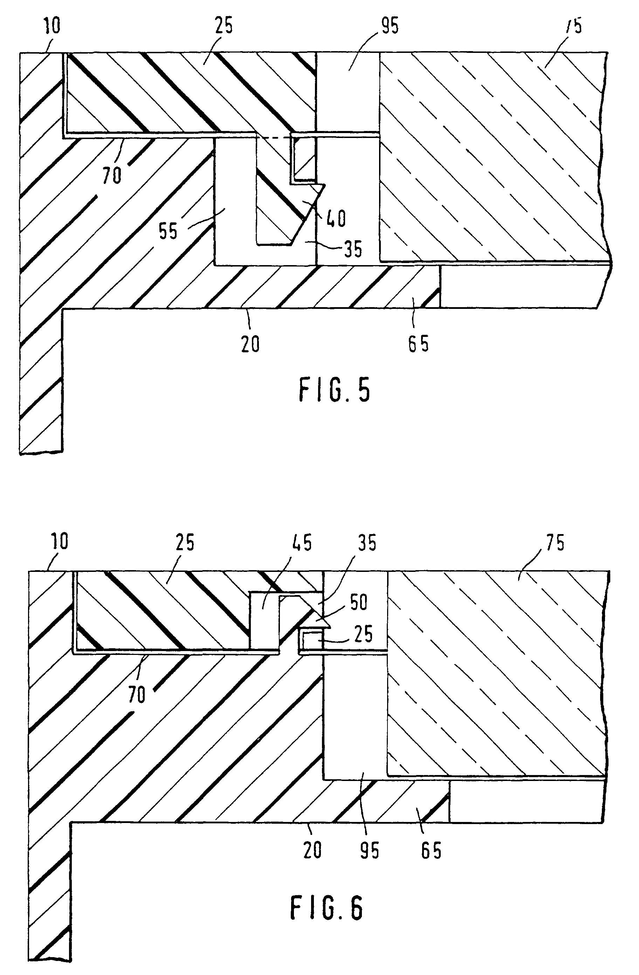

Als lösbare Verbindung zwischen dem Dekorteil 25 und dem Randbereich 20 kann auch eine Rastverbindung eingesetzt werden. Eine solche Verbindung ist den Figuren 4, 5 und 6 zu entnehmen. In Figur 4 ist die Geräteoberfläche 10 an einer Ecke des zweistufigen Randbereichs 20 dargestellt. Dabei weist die höhere Stufe 70 eine Rastnase 50 und eine Rastöffnung 55 auf. In dem in Figur 4 nicht dargestellten Teil des Randbereichs 20 können weitere Rastnasen und Rastöffnungen angebracht sein. Zur Verdeutlichung der Rastverbindung zeigt Figur 5 einen Vertikalschnitt B-B durch den Randbereich 20 an der Stelle der Rastöffnung 55 und Figur 6 einen Vertikalschnitt C-C durch den Randbereich 20 an der Stelle der Rastnase 50.

Im Unterschied zu Figur 3 ist das Dekorteil 25 in Figur 5 nicht durch eine Klebeschicht mit der höheren Stufe 70 des zweistufigen Randbereichs 20 verbunden. Vielmehr weist das Dekorteil 25 an seiner dem Randbereich 20 zugewandten Seite eine Rastnase 40 auf, die in die dem Dekorteil 25 zugewandte Rastöffnung 55 der höheren Stufe 70 des Randbereichs 20 einrastet. Die Rastöffnung 55 mündet dabei zwischen der höheren Stufe 70 und der tieferen Stufe 65 in Richtung zur durchsichtigen Scheibe 75, die auf der tieferen Stufe 65 aufliegt und von der höheren Stufe 70 durch einen zweiten Spalt 95 getrennt ist, in einen ersten Spalt 35 zur Aufnahme der Rastnase 40 des Dekorteils 25. Über den ersten und den zweiten Spalt 35 und 95 kann die Rastnase 40 von Hand oder einfacher mit Hilfe eines Verdrehwerkzeugs weggedrückt werden, so daß das Dekorteil 25 entnehmbar ist.

In Figur 6 rastet die dem Dekorteil 25 zugewandte Rastnase 50 der höheren Stufe 70 des zweistufigen Randbereichs 20 in eine der höheren Stufe 70 zugewandte Rastöffnung 45 des Dekorteils 25 ein. Im Gegensatz zu Figur 3 ist zwischen dem Dekorteil 25 und der höheren Stufe 70 keine Klebeschicht vorhanden. Die der höheren Stufe 70 zugewandte Rastöffnung 45 des Dekorteils 25 mündet in einen zur durchsichtigen Scheibe 75, die auf der tieferen Stufe 65 aufliegt und durch einen zweiten Spalt 95 von der höheren Stufe 70 getrennt ist, hin gerichteten ersten Spalt 35 zur Aufnahme der Rastnase 50 der höheren Stufe 70. Durch den ersten und den zweiten Spalt 35 und 95 kann die Rastnase 50 der höheren Stufe 70 des Randbereichs 20 von Hand oder einfacher durch ein Verdrehwerkzeug weggedrückt werden, so daß sich das Dekorteil 25 auf einfache Weise entnehmen läßt.

Das Dekorteil 25 kann als Kunststoffteil, als Holzteil oder als Metallteil beispielsweise in Form einer Folie oder auch als starres Teil ausgeführt sein. Der Einsatzbereich ist dabei nicht auf schnurlose Telefone beschränkt, sondern betrifft alle Geräte mit einer durch ein Dekorteil umgebbaren Anzeigevorrichtung. Dies können beispielsweise auch Fernsehgeräte sein, bei denen der Bildschirm an der Geräteoberfläche von einem Dekorteil umgeben ist.

## Patentansprüche

1. Gerät (1), insbesondere schnurloses Telefon, mit einer Anzeigevorrichtung (5), wobei die Geräteoberfläche (10) einen Durchbruch (15) zur Aufnahme der Anzeigevorrichtung (5) aufweist und ein den Durchbruch (15) umgebender Randbereich (20) des Gerätes (1) gegenüber der Geräteoberfläche (10) vertieft ist, **dadurch gekennzeichnet, daß** auf den Randbereich (20) ein Dekorteil (25) einlgegbar und über eine lösbare Verbindung auf dem Randbereich (20) befestigbar ist.

2. Gerät (1) nach Anspruch 1, **dadurch gekennzeichnet, daß** die lösbare Verbindung eine Klebeverbindung ist.

3. Gerät (1) nach Anspruch 1 oder 2, **dadurch gekennzeichnet, daß** die Klebeverbindung durch ein doppelseitiges Klebeband (30) erfolgt.

4. Gerät (1) nach einem der vorherigen Ansprüche, **dadurch gekennzeichnet, daß** das Dekorteil (25) an seiner zum Randbereich (20) weisenden Seite eine Klebefläche (30) aufweist, über die es selbstklebend mit dem Randbereich (20) verbunden ist.

5. Gerät (1) nach einem der vorherigen Ansprüche, **dadurch gekennzeichnet, daß** das Dekorteil (25) einen Durchbruch zur Aufnahme der Anzeigevorrichtung (5) und/oder Durchbrüche zur Aufnahme von Tasten (85) aufweist.

6. Gerät (1) nach Anspruch 1, **dadurch gekennzeichnet, daß** die lösbare Verbindung eine Rastverbindung ist.

7. Gerät (1) nach Anspruch 6, **dadurch gekennzeichnet, daß** das Dekorteil (25) Rastnasen (40) aufweist, die in Rastöffnungen (55) des Randbereichs (20) einrasten.

8. Gerät nach Anspruch 6 oder 7, **dadurch gekennzeichnet, daß** der Randbereich (20) Rastnasen (50) aufweist, die in Rastöffnungen (45) des Dekorteils (25) einrasten.

9. Gerät (1) nach einem der vorherigen Ansprüche, **dadurch gekennzeichnet, daß** zwischen Dekorteil (25) und Randbereich (20) ein Spalt (35) vorgesehen ist, zur Aufnahme vorzugsweise eines Verdrehwerkzeuges zum Lösen der Verbindung.

10. Gerät (1) nach einem der vorherigen Ansprüche, **dadurch gekennzeichnet, daß** der Randbereich (20) gegenüber der Geräteoberfläche (10) zweistufig vertieft ist, daß auf der den Durchbruch (15) begrenzenden tieferen Stufe (65) des zweistufigen Randbereichs (20) eine die Anzeigevorrichtung (5) bedeckende durchsichtige Scheibe (75) aufliegt und daß das Dekorteil (25) auf der höheren Stufe (70) des zweistufigen Randbereichs (20) aufliegt.

## Claims

1. Apparatus (1), in particular a cordless phone, with a display device (5), the surface (10) of the apparatus having an aperture (15) for receiving the display device (5), and an edge region (20) of the apparatus (1) which surrounds the aperture (15) being recessed with respect to the surface (10) of the apparatus, **characterized in that** a decorative part (25) can be placed on the edge region (20) and can be fastened on the edge region (20) by means of a releasable connection.

2. Apparatus (1) according to Claim 1, **characterized in that** the releasable connection is an adhesive connection.

3. Apparatus (1) according to Claim 1 or 2, **characterized in that** the adhesive connection takes place by means of a double-sided adhesive tape (30).

4. Apparatus (1) according to one of the preceding claims, **characterized in that** the decorative part (25) has on its side facing the edge region (20) an adhesive area (30), via which it is connected in a self-adhesive manner to the edge region (20).

5. Apparatus (1) according to one of the preceding claims, **characterized in that** the decorative part (25) has an aperture for receiving the display device (5) and/or apertures for receiving buttons (85).

6. Apparatus (1) according to Claim 1, **characterized in that** the releasable connection is a latching connection.

7. Apparatus (1) according to Claim 6, **characterized in that** the decorative part (25) has latching lugs (40), which engage in latching openings (55) of the edge region (20).

8. Apparatus according to Claim 6 or 7, **characterized in that** the edge region (20) has latching lugs (50), which engage in latching openings (45) of the decorative part (25).

9. Apparatus (1) according to one of the preceding claims, **characterized in that** a gap (35) is provided between the decorative part (25) and the edge region (20) for receiving, preferably, a turning tool for releasing the connection.

10. Apparatus (1) according to one of the preceding claims, **characterized in that** the edge region (20) is recessed in two steps with respect to the surface (10) of the apparatus, **in that** a transparent panel (75) which covers the display device (5) rests on the lower step (65) of the two-stepped edge region (20), bounding the aperture (15), and **in that** the decorative part (25) rests on the higher step (70) of the two-stepped edge region (20).

## Revendications

1. Appareil (1) avec un dispositif d'affichage (5) en particulier téléphone sans fil, présentant à sa surface (10) une ouverture (15) pour accueillir le dispositif d'affichage (5), et une zone marginale (20) en creux par rapport à la surface (10) de l'appareil, entourant l'ouverture (15)
**caractérisé en ce que**
sur la zone marginale (20) une partie décorative (25) peut être mise en place et fixée à cette zone par une liaison séparable.

2. Appareil (1) selon la revendication 1,
**caractérisé en ce que**
la liaison séparable est une liaison par collage.

3. Appareil (1) selon l'une quelconque des revendications 1 ou 2,
**caractérisé en ce que**
la liaison par collage est assurée par une bande adhésive (30) double face.

4. Appareil (1) selon l'une quelconque des revendications précédentes,
**caractérisé en ce que**
la partie décorative (25) présente, sur son côté en regard de la zone marginale (20) une portée de collage (30) par laquelle elle est reliée par auto-adhérence à la zone marginale (20).

5. Appareil (1) selon l'une quelconque des revendications précédentes,
**caractérisé en ce que**
la partie décorative (25) présente une ouverture pour accueillir le dispositif d'affichage (5) et/ou des ouvertures pour accueillir des touches (85).

6. Appareil (1) selon la revendication 1,
**caractérisé en ce que**
la liaison séparable est une liaison à encliquetage.

7. Appareil (1) selon la revendication 6,
**caractérisé en ce que**
la partie décorative (25) présente des ergots d'accrochage (40), s'accrochent dans des ouvertures d'accrochage (55) de la zone marginale (20).

8. Appareil (1) selon la revendication 6,
**caractérisé en ce que**
la zone marginale (20) présente des ergots d'accrochage, qui s'enclenchent dans des ouvertures d'accrochage (55) de la partie décorative (25)

9. Appareil (1) selon l'une quelconque des revendications précédentes,
**caractérisé en ce qu'**
entre la partie décorative (25) et la zone marginale (20) est prévue une fente (35) pour accueillir avantageusement un outil tournant pour dégager la liaison.

10. Appareil (1) selon l'une quelconque des revendications précédentes,
**caractérisé en ce que**
la zone marginale (20) présente deux étages d'enfoncement par rapport à la surface (10) de l'appareil, et sur l'étage (65) le plus profond de cette zone (20) limitant le passage (15) repose une vitre transparente (75) recouvrant le dispositif d'affichage (5) tandis que la partie décorative (25) repose sur l'étage (70) le plus élevé de la zone marginale (20) à deux étages.
